**Europäisches Patentamt**

(19) **European Patent Office**

**Office européen des brevets**

(11) Numéro de publication: **0 141 956**

**B1**

(12) **FASCICULE DE BREVET EUROPEEN**

(45) Date de publication du fascicule du brevet: **18.05.88**

(51) Int. Cl.⁴: **H 04 Q 11/04**

(21) Numéro de dépôt: **84110596.8**

(22) Date de dépôt: **06.09.84**

(54) **Dispositif de transfert et de traitement de voies de données ou de signalisation d'un ensemble de lignes multiplex.**

(30) Priorité: **14.09.83 FR 8314619**

(43) Date de publication de la demande:
**22.05.85 Bulletin 85/21**

(45) Mention de la délivrance du brevet:
**18.05.88 Bulletin 88/20**

(84) Etats contractants désignés:
**BE CH DE FR GB IT LI NL SE**

(56) Documents cités:
**EP-A-0 035 926**
**EP-A-0 085 256**
**EP-A-0 091 338**
**EP-A-0 111 792**
**FR-A-2 283 605**
**FR-A-2 365 922**

**REVIEW OF THE ELECTRICAL COMMUNICATION LABORATORIES, vol. 28, nos. 5-6, mai-juin 1980, pages 338-349, Tokyo, JP; TOHRU UCHIYAMA et al.: "Digital data switching control system"**

(73) Titulaire: **ALCATEL CIT**
**33, rue Emeriau**
**F-75015 Paris (FR)**

(72) Inventeur: **Boulard, Pierre**
**Résidence de Bourgogne 5, rue du Berry**
**F-22300 Lannion (FR)**
Inventeur: **Gouriou, Roger**
**7, rue des Hortensias**
**F-22700 Louannec (FR)**

(74) Mandataire: **Weinmiller, Jürgen et al**
**Lennéstrasse 9 Postfach 24**
**D-8133 Feldafing (DE)**

(56) References cited:
**IEEE COMMUNICATIONS MAGAZINE, vol. 21, no. 3, mai 1983, pages 47-52, IEEE, New York, US; MASAICHI-KAJIWARA: "Trends in digital switching system architectures"**

Courier Press, Leamington Spa, England.

# Description

L'invention concerne un dispositif de transfert et de traitement de voies de données ou de signalisation d'un ensemble de lignes multiplex.

Dans les réseaux de télécommunications modernes, les informations, sont véhiculées sur une même ligne multiplex sous forme d'impulsions codées contenues dans des voies d'une trame. Classiquement une trame a une durée de 125 microsecondes et est divisée en 32 intervalles appelés voies. La ligne multiplex fonctionne à 2,048 MHz et les données et la signalisation ont un débit moyen de 64 kbit/s par voie. Les données et la signalisation doivent être traitées indépendamment des autre informations transmises par les lignes multiplex; pour effectuer ce traitement il faut donc extraire de la ligne multiplex les informations à traiter, et réémettre sur une ligne multiplex des informations après traitement.

Ces traitements sont effectués soit au central numérique auquel les lignes multiplex sont reliées soit encore dans un centre satellite relié au central numérique par des lignes multiplex; le traitement est effectué dans une unité de commande numérique implantée soit au central numérique, soit au centre satellite; par exemple dans un centre satellite l'unité de commande numérique assure le fonctionnement de l'ensemble du centre satellite et des liaisons de celui-ci avec les abonnés, analogiques ou numériques, d'une part, et avec le central numérique d'autre part.

Le traitement d'un ensemble de n lignes multiplex est effectué par des contrôleurs de communication série assurant le formatage et l'assemblage des trames dites HDLC (High Data Level Control). Un contrôleur de communication série est affecté à une voie d'une ligne multiplex pendant toute la durée d'un échange sur cette voie, et le contrôleur peut ensuite être affecté à une autre voie de la même ligne multiplex, ou à une voie quelconque d'une autre ligne multiplex de l'ensemble de lignes multiplex.

Il est donc nécessaire d'extraire les voies de chaque ligne multiplex pour l'aiguiller sur un contrôleur, et de réémettre après traitement par le contrôleur, dans une voie d'une ligne multiplex.

On connaît, par le document EP-A-0 085 256, un circuit de traitement d'information, dans lequel un réseau de connexion temporel est lié à des lignes de transmission, chaque ligne étant une ligne multiplex. Chaque ligne est reliée en entrée au réseau de connexion à travers un circuit d'extraction; elle est reliée en sortie au réseau de connexion à travers un circuit d'injection. Le circuit d'extraction est relié à une unité de commande centrale à travers un circuit de réception de signaux, et le circuit d'injection est relié à l'unité de commande centrale à travers un circuit d'émission. Le réseau de connexion est également relié à l'unité de commande centrale à travers un commutateur qui distribue des signaux de commande au réseau de connexion pour les opérations de commutation temporelle.

Une autre solution pour l'extraction et l'injection d'une voie d'une ligne multiplex est donnée dans l'article "Eléments de multiplexage MIC 30 voies TNE de la deuxième génération" de la revue Câbles et Transmission 32e A, N° 2 avril 1978, pages 152 à 191; cette solution fait appel à des registres séries et parallèles, que l'on peut donc associer à un contrôleur de communication série. Si l'on a n lignes multiplex et m contrôleurs, chaque contrôleur pouvant être affecté à une voie quelconque d'une ligne multiplex quelconque, il faut également prévoir, pour chaque contrôleur des organes permettant la sélection tant à la réception qu'à l'émission, un contrôleur de communication série et l'ensemble des organes qui lui sont associés constituant un dispositif individuel.

Les organes associées sont essentiellement: un registre à 8 bits, qui reçoit le numéro de la ligne multiplex à sélectionner et le numéro de la voie choisie sur cette ligne multiplex; un multiplexeur permettant la sélection d'une ligne multiplex parmi n, pour orienter vers le contrôleur la ligne multiplex sélectionnée; un démultiplexeur permettant l'émission du contrôleur sur une ligne multiplex parmi n, le démultiplexeur étant piloté en synchronisme avec le multiplexeur; deux registres, à 8 bits chacun, pour le transfert du contenu de la voie choisie vers le contrôleur; un premier registre est chargé au rythme de 2,048 Mbit/s pendant le temps correspondant à celui de la voie, puis son contenu est transféré en parallèle dans le deuxième registre dont le contenu est alors transféré en série vers le contrôleur au rythme régulier de 64 kbit/s; deux registres à 8 bits chacun pour l'émission série du contrôleur vers une ligne multiplex, un premier registre recevant les informations du contrôleur au rythme de 64 kbit/s et un second registre recevant les informations du premier registre en parallèle et les émettant en série, au rythme de 2,048 Mbit/s. Un générateur de signaux d'horloge délivre les signaux nécessaires au fonctionnement des dispositifs individuels.

Les dispositifs individuels comportant donc des organes en nombre relativement important, ce qui augmente leur coût et le volume nécessaire à leur implantation.

L'invention a pour but de réduire le coût et le volume d'un dispositif de transfert et de traitement de voies de données ou de signalisation d'un ensemble de lignes multiplex.

Ce but est atteint par le dispositif tel qu'il est défini par la revendication 1.

L'invention va être décrite à l'aide d'un exemple de réalisation illustré par les figures annexées dans lesquelles,

— la figure 1 représente le raccordement d'un dispositif de transfert et de traitement de l'invention à des lignes multiplex,

— la figure 2 représente le dispositif de transfert et de traitement de la figure 1,

— la figure 3 est un chronogramme de signaux d'horloge utilisés dans le dispositif de la figure 2.

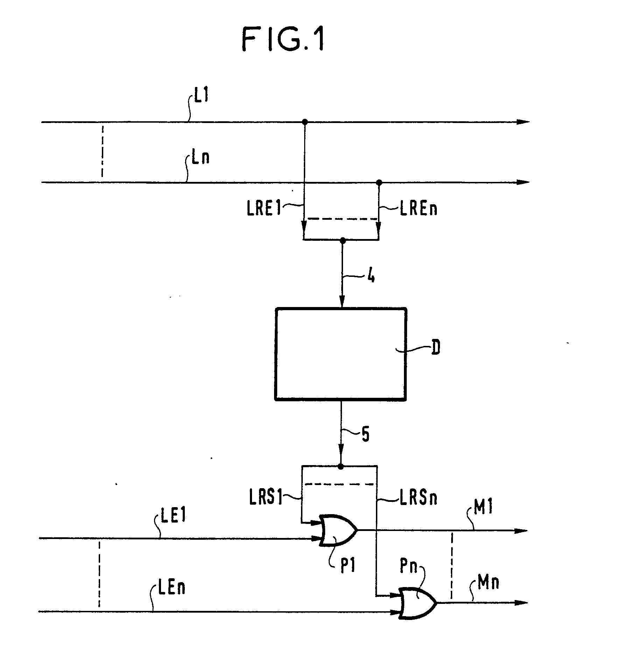

Dans la figure 1, un dispositif de transfert et de traitement D de l'invention est relié en entrée à n lignes multiplex L1 à Ln par l'intermédiaire d'une liaison entrante 4 constituée par des lignes réseau entrantes LRE1 à LREn reliées aux lignes multiplex L1 à Ln, respectivement; il est relié en sortie à l'entrée de n portes OU, P1 à Pn par une liaison sortante 5 constituée par n lignes réseau sortantes LRS1 à LRSn; les porte OU, P1 à Pn sont également reliées en entrée à n lignes multiplex LE1 à LEn, respectivement; les portes OU, P1 à Pn sont reliées en sortie à n lignes multiplex M1 à Mn, respectivement.

Le dispositif de transfert et de traitement D permet l'extraction des voies de données et de signalisation de chacune des lignes multiplex L1 à Ln dont les autres voies sont acheminées vers des dispositifs locaux traitant ces autres voies; ces dispositifs locaux sont par exemple un réseau de connexion numérique, des convertisseurs numériques/analogiques.

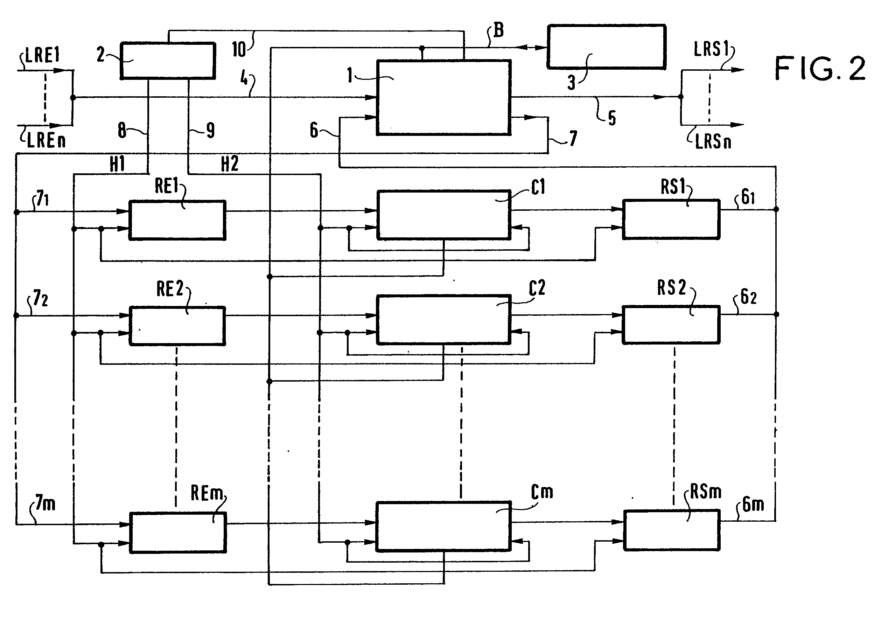

La figure 2 représente le dispositif de transfert et de traitement D de la figure 1, dans lequel 1 est une matrice de connexion, C1, C2, ... Cm, sont des contrôleurs de communication série, RE1, RE2, ... REm, sont des registres d'entrée, RS1, RS2, ... RSm, sont des registres de sortie, 2 est une horloge, et 3 est un microprocesseur relié par un bus B à la matrice de connexion et aux contrôleurs. Le microprocesseur délivre les informations nécessaires à l'extraction des voies des lignes multiplex L1 à Ln, l'injection sur les lignes multiplex M1 à Mn, et au fonctionnement des m contrôleurs.

La matrice de connexion 1 est reliée en entrée à la liaison entrante 4 constituée par les n lignes réseau entrantes LRE1 à LREn, et à une liaison entrante 6 constituée de m lignes entrantes 61, 62, ... 6m; la matrice est reliée en sortie à la liaison sortante 5 constituée des n lignes réseau sortantes LRS1 à LRSn, et à une liaison sortante 7 constituée de m lignes sortantes 71, 72, ... 7m. La matrice de connexion 1 réalise des connexions spatiales et temporelles (changement de voies) entre les liaisons entrantes et sortantes; cette matrice de conexion est donc un commutateur bien connu de l'homme de l'art, à n+m entrées et n+m sorties.

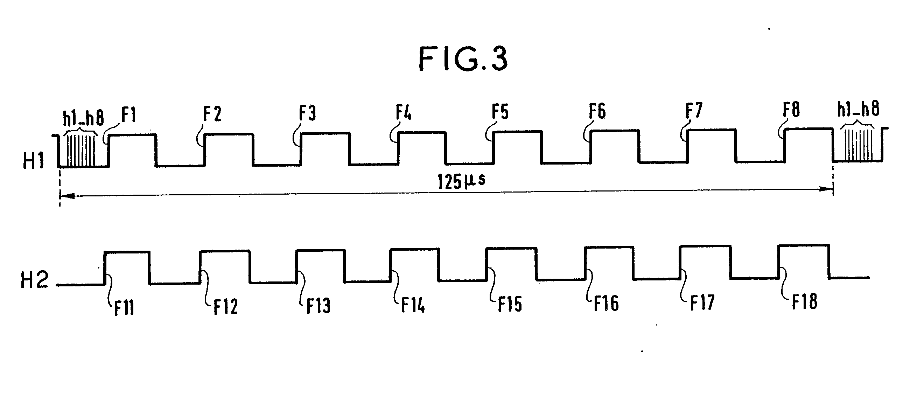

L'horloge 2 délivre un signal d'horloge composite H1 sur un fil 8 relié à l'entrée horloge de chacun des registres d'entrée et de sortie, RE1 à REm et RS1 à RSm; signal d'horloge composite H1 permet le changement de rythme, 2,048 Mbit/s, 64 kbit/s par chargement des registres d'entrée à un débit instantané de 2,048 Mbit/s et transfert de ceux-ci à un débit moyen de 64 kbit/s, et par chargement des registres de sortie à un débit moyen de 64 kbit/s et transfert de ceux-ci à un débit instantané de 2,048 Mbit/s. La figure 3 représente le signal d'horloge composite H1 constitué par un signal d'horloge à 2,048 Mbit/s, et un signal d'horloge à 64 kbit/s comportant, dans un intervalle de temps de 125 microsecondes, huit créneaux dont seul le premier comporte huit impulsions du signal d'horloge à 2,048 Mbit/s. L'horloge 2 délivre également sur un fil 9 un signal d'horloge H2 à 64 kbit/s qui pilote les contrôleurs C1 à Cm à la réception et à l'émission; ce signal d'horloge H2, représenté figure 3, est légèrement en avance de phase par rapport au signal d'horloge à 64 kbit/s du signal d'horloge composite H1, afin de tenir compte des contraintes temporelles imposées par la matrice de connexion d'une part et les contrôleurs d'autre part.

L'horloge 2 délivre également, sur une liaison 10 des signaux d'horloges nécessaires au fonctionnement de la matrice de connexion 1; ces signaux sont constitués par: un signal d'échantillonnage interne fonction de la matrice utilisée, ce signal d'échantillonnage étant à 4,096 Mbit/s pour une matrice de connexion ayant huit entrées, et huit sorties (8 = n+m), et un signal de synchronisation des n+m lignes reliées en entrée et en sortie de la matrice, de périodicitée 125 microsecondes.

Les registres d'entrée RE1, RE2, ... REm, sont reliés en entrée aux lignes sortantes 71, 72, ... 7m, respectivement, et en sortie aux contrôleurs de communication série C1 à Cm, respectivement. Les registres des sortie RS1, RS2, ... RSm, sont reliés en entrée aux contrôleurs de communication série C1 à Cm, respectivement, et en sortie aux lignes entrantes 61 à 6m, respectivement. La matrice de connexion 1 et chacun des contrôleurs de communication série C1 à Cm sont reliés au bus B, lui-même relié au microprocesseur.

Les lignes multiplex L1 à Ln, figure 1, acheminent chacune, des informations contenues dans les trente deux voies d'une trame. Les données à traiter, contenues dans des voies de la trame doivent être traitées indépendamment des autres voies de la trame qui sont aiguillées vers des dispositifs locaux qui traitent ces autres voies. La matrice de connexion 1 permet, sous commande du microprocesseur 3, d'aiguiller n'importe quelle voie de l'une quelconque des lignes multiplex L1 à Ln auxquelles elle est reliée par les lignes réseau entrantes LRE1 à LREn, sur l'une, quelconque, des lignes sortantes 71, 72, ... 7m, constituant la liaison sortante 7; de même la matrice de connexion permet d'aiguiller n'importe quelle voie de l'une quelconque des lignes entrantes 61 à 6m sur l'une, quelconque, des lignes réseau sortantes LRS1 à LRSn. Les voies à traiter des lignes multiplex L1 à Ln sont transférées sur des voies fixes et identiques des lignes sortantes 71 à 7m; de même les informations des registres de sortie RS1 à RSm sont émises sur les lignes entrantes 61 à 6m dans des voies fixes et identiques, ces voies étant les mêmes, c'est-à-dire ayant même numéro, que celles des lignes sortantes 71 à 7m. De cette manière le signal d'horloge composite H1 est commun à tous les registres d'entrée et de sortie. Les voies fixes des lignes entrantes 61 à 6m sont ensuite transférées dans des voies quelconques des lignes réseau sortantes LRS1 à LRSn.

Les informations présentes sur les lignes sortantes 71 à 7m sont entrées en série dans les registres d'entrée RE1 à REm, sous commande des impulsions h1 à h8 du signal d'horloge à 2,048 Mbit/s du signal d'horloge composite H1. La prise en compte par les contrôleurs C1 à Cm de ces informations contenues dans les registres d'entrée est faite sur les fronts montants F11 à F18 du signal d'horloge H2 à 64 kbit/s, alors que les décalages série dans les registres d'entrée se font sur les fronts montants F1 à F8 du signal d'horloge à 64 kbit/s du signal d'horloge composite H1. En émission, les informations sont disponibles en sortie des contrôleurs C1 à Cm sur les fronts montants F11 à F18 du signal d'horloge H2; elles sont chargées en série dans les registres de sortie RS1 à RSm sur les fronts montants F1 à F8 du signal à 64 kbit/s du signal d'horloge composite H1, puis transférées en série sur les lignes entrantes 61 à 6m par les impulsions h1 à h8 du signal d'horloge à 2,048 Mbit/s du signal d'horloge composite H1.

La matrice de connexion 1 est par exemple du type SM233 commercialisée par SIEMENS, et les contrôleurs de communication série C1 à Cm sont par exemple du type 8530 commercialisé par A.M.D. Dans le cas de quatre lignes multiplex L1, L2, L3, L4, et M1, M2, M3, M4, il est possible de monter la matrice de connexion 1, quatre contrôleurs C1 à C4, les registres d'entrée RE1 à RE4, les registres de sortie RS1 à RS4, et le microprocesseur 3 sur une seule carte de circuit imprimé.

Le dispositif de transfert et de traitement de l'invention permet, grâce à la matrice de connexion, le rebouclage émission sur réception, c'est-à-dire soit le rebouclage direct d'un contrôleur, soit le rebouclage avec croisement entre contrôleurs, les informations émises par un contrôleur étant reçues par un autre contrôleur, et réciproquement. Cette possibilité de rebouclage permet dans le cas de rebouclage direct d'un contrôleur de procéder à des tests sur ce contrôleur en cas d'avarie de celui-ci; elle permet, dans le cas de rebouclage avec croisement entre contrôleurs, un dialogue entre contrôleurs, ce dialogue étant utilisé, lors de la mise en service, pour la mise au point matérielle et logicielle des contrôleurs et des dispositifs utilisateurs du niveau supérieur; par exemple un premier contrôleur joue son rôle normal et un deuxième contrôleur simule une station distante avec laquelle le premier contrôleur est en dialogue.

Il est également possible, par la matrice de connexion 1, de diffuser simultanément vers toutes les lignes multiplex M1 à Mn, ou vers une partie de celles-ci, des informations issues d'un contrôleur. Cette possibilité d'atteindre en synchronisme les stations reliées à ces lignes multiplex présente un intérêt dans des applications telles que par exemple, commande de réinitialisation des canaux d'échange des lignes multiplex, délivrance de tops horaires de synchronisation.

**Revendications**

1. Dispositif de transfert et de traitement de voies de données ou de signalisation d'un ensemble de n lignes multiplex (L1 à Ln) fonctionnant chacune à 2,048 MHz et les informations de chaque voie de données ou de signalisation ayant un débit de 64 kbit/s, comportant m contrôleurs (C1 à Cm) de communication série, et une horloge (2) chaque contrôleur étant associé à des registres d'entrée (RE1—REm) et à des registres de sortie (RS1—RSm), les registres d'entrée effectuant le changement de rythme 2,048 Mbit/s, 64 kbit/s et les registres de sortie effectuant le changement de rythme inverse, caractérisé par le fait qu'il comporte une matrice de connexion (1) effectuant des commutations spatiales et des commutations temporelles et reliée en entrée aux n lignes multiplex (L1 à Ln) par des lignes réseau entrantes (LRE1 à LREn), et à m lignes entrantes (61 à 6m), et en sortie à n lignes multiplex (M1 à Mn) par des lignes réseau sortantes (LRS1 à LRSn) et à m lignes sortantes (71 à 7m), que chaque contrôleur (C1 à Cm) est relié respectivement à un registre d'entrée (RE1 à REm) et à un registre de sortie (RS1 à RSm), chaque registre d'entrée étant relié en sortie de la matrice de connexion (1) par une ligne sortante (71 à 7m), chaque registre de sortie étant relié en entrée de la matrice de connexion (1) par une ligne entrante (61 à 6m), que l'horloge (2) délivre sur un premier fil (8) un signal d'horloge composite (H1) à chacun des registres d'entrée et de sortie, sur un deuxième fil (9) un signal d'horloge (H2) à chacun des contrôleurs, et par une liaison (10) des signaux d'horloge nécessaires au fonctionnement de la matrice de connexion, et qu'une voie des quelconque lignes multiplex (L1 à Ln) est connectée sur une voie fixe de n'importe quelle ligne sortante (71 à 7m), cette voie fixe étant identique sur toutes les lignes sortantes, le contenu des registres de sortie étant transféré dans une voie fixe des lignes entrantes (61 à 6m), cette voie fixe étant identique sur toutes les lignes entrantes, et une voie fixe des lignes entrantes étant connectée sur n'importe quelle voie de l'une quelconque des lignes réseau sortantes (LRS1 à LRSn), les voies fixes des lignes entrantes (61 à 6m) et sortantes (71 à 7m) étant identiques.

2. Dispositif de transfert et de traitement selon la revendication 1, caractérisé par le fait que le signal d'horloge composite (H1) est constitué par un signal d'horloge à 2,048 Mbit/s et par un signal d'horloge à 64 kbit/s comportant dans un intervalle de temps de 125 microsecondes, huit créneaux dont seul le premier porte huit impulsions (h1 à h8) du signal à 2,048 Mbit/s, et que le signal d'horloge (H2) est un signal à 64 kbit/s.

3. Dispositif selon la revendication 1, caractérisé par le fait que la matrice de connexion (1) et les contrôleurs de communication série (C1 à Cm) sont pilotés par un microprocesseur (3) et que par commande du microprocesseur la matrice de connexion diffuse sur tout ou partie des n lignes réseau sortantes (LRS1 à LRSn) un message émis par un contrôleur.

4. Dispositif selon la revendication 1, caractérisé par le fait que la matrice de connexion (1) et les contrôleurs de communication série (C1 à Cm) sont pilotés par un microprocesseur (3), et que sous commande du microprocesseur deux contrôleurs quelconques sont reliés entre eux par l'intermédiaire de la matrice de connexion afin d'effectuer des tests sur l'un des contrôleurs ou de permettre un dialogue entre les deux contrôleurs.

**Patentansprüche**

1. Anordnung zur Übertragung und Verarbeitung von Daten- oder Signalisierungskanälen einer Gruppierung von n 2.048 Mbit/s Multiplexleitungen (L1 bis Ln), mit einer Informationsübertragungsrate von 64 kbit/s in jedem Daten- oder Signalisierungskanal, wobei die Anordnung m Serienkommunikationskontrolleinheiten (C1 bis Cm) und einen Taktgeber (2) aufweist und jede Kontrolleinheit mit Eingangsregistern (RE1—REm) und :Ausgangsregistern (RS1—RSm) verbunden ist, wovon die Eingangsregister die Umsetzung der Übertragungsrate von 2.048 Mbit/s auf 64 kbit/s und die Ausgangsregister die Umsetzung im umgekehrten Sinne durchführen, dadurch gekennzeichnet, daß sie eine Vermittlungsmatrix (1) besitzt, welche eine Raumtrennvermittlung und eine Zeittrennvermittlung durchführt und eingangsseitig an n Multiplexleitungen (L1 bis Ln) über Netzeingangsleitungen (LER1 bis LREn) sowie an m Eingangsleitungen (G1 bis Gm), und ausgangsseitig an n Multiplexleitungen (M1 bis Mn) über Netzausgangsleitungen (LRS1 bis LRSn) sowie an m Ausgangsleitungen (71 bis 7m) angeschlossen ist; daß jede Kontrolleinheit (C1 bis Cm) an ein Eingangsregister (RE1 bis REm) und ein Ausgangsregister (RS1 bis RSm) angeschlossen ist, wobei jedes Eingangsregister an den Ausgang der Vermittlungsmatrix (1) über eine Ausgangsleitung (71 bis 7m) und jedes Ausgangsregister an den Eingang der Vermittlungsmatrix über Eingangsleitungen (61 bis 6m) verbunden ist; daß der Eingang der Vermittlungsmatrix über Eingangsleitungen (61 bis 6m) verbunden ist; daß der Taktgeber (2) über eine erste Leitung (8) ein zusammengesetztes Taktsignal (H1) an jedes Eingangs- und Ausgangsregister, über eine zweite Leitung (9) ein Taktsignal (H2) an jede Kontrolleinheit und über eine Linie (10) die für das Funktionieren der Vermittlungsmatrix notwendigen Taktsignale liefert; und daß eine beliebige Multiplexleitung (L1 bis Ln) an einen festen Kanal irgendeiner Ausgangsleitung (71 bis 7m) angeschlossenen ist, wobei dieser feste Kanal für alle Ausgangsleitungen der gleiche ist und der Inhalt der Ausgangsregister über einen festen Kanal der Eingangsleitungen (61 bis 6m) übertragen wird, wobei dieser Kanal für alle Eingangsleitungen der gleiche ist, und daß ein fester Kanal der Eingangsleitungen mit irgendeinem Kanal einer beliebigen Netzausgangsleitung (LRS1 bis LRSn) verbunden ist, wobei die festen Kanäle der Eingangsleitungen (61 bis 6m) und der Ausgangsleitungen (71 bis 7m) identisch sind.

2. Anordnung zur Übertragung und Verarbeitung nach Anspruch 1, dadurch gekennzeichnet, daß das zusammengesetzte Taktsignal (H1) aus einem Taktsignal vonm 2.048 Mbit/s und einem Taktsignal von 64 kbit/s besteht, welches in einem Zeitintervall von 125 Mikrosekunden acht Pulsintervalle aufweist, von denen nur das erste acht Impulse (h1 bis h8) des 2.048 Mbit/s Signals führt, und daß das Taktsignal (H2) ein Signal von 64 kbit/s ists.

3. Anordnung nach Anspruch 1, dadurch gekennzeichnet, daß die Vermittlungsmatrix (1) und die Serienkommunikationskontrolleinheiten (C1 bis Cm) durch einen Mikroprozessor (3) getrennt werden, und daß durch Befehl des Mikroprozessors die Vermittlungsmatrix über alle oder einen Teil der Netzausgangsleitungen (LRS1 bis LRSn) eine Meldung verbreitet, die von einer Kontrolleinheuit ausgesendet wird.

4. Anordnung nach Anspruch 1, dadurch gekennzeichnet, daß die Vermittlungsmatrix (1) und die Serienkommunikationskontrolleinheiten (C1 bis Cm) durch einen Mikroprozessor (3) gesteuert werden, und daß durch Befehl des Mikroprozessors zwei beliebige Kontrolleinheiten miteinander über die Vermittlungsmatrix verbunden werden, um Überprüfungen an einer der Kontrolleinheiten durchzuführen, oder um einen Dialog zwischen beiden Kontrolleinheiten zu ermöglichen.

**Claims**

1. A data or signaling time slot transfer and processing system for a set of n 2.048 Mbit/s multiplex lines (L1 to Ln) with the information in each data or signaling time slot having a bit rate of 64 kbit/s, comprising m serial communication controllers (C1 to Cm), and a clock (2), each controller being associated with input registers (RE1—REm) and output registers (RS1—RSm), whereof the input registers effect the bit rate change from 2.048 Mbit/s to 64 kbit/s and the output registers effect the bit rate change in the reverse sense, characterized in that, a switching matrix (1) effecting space-division switching and time division switching and being connected on its input side to the m multiplex lines (L1 to Ln) by switching matrix input lines (LRE1 to LREn) and to m input lines (61 to 6m), and on its output side to a set of n multiplex lines (M1 to Mn) by switching matrix output lines (LRS1 to LRSn) and to m output lines (71 to 7m), wherein each controler (C1 to Cm) is connected respectively to an input register (RE1 to REm) and an output register (RS1 to RSm), each input register is connected to the output of the switching matrix (1) by an output line (71 to 7m), each output register is connected to the input of the switching matrix (1) by an input line (61 to 6m); that the clock (2) supplies on a first line (8) a composite clock signal (H1) to each input and output register and on a second line (9) a clock signal (H2) to each controler, and on a line (10) clock signals necessary for the functioning of the switching matrix; that any time slot of the multiplex lines (L1 to Ln) is connected to a fixed time slot of any output line (71 to 7m), said line being the same for all output lines, and the being the same for all output lines, and the contents of the output registers being transferred into a fixed time slot of the input lines (61 to 6m), the said input line fixed time slot being the same for all input lines, and that a fixed time slot of the input line is connected to any time slot of the switching matrix output lines (LRS1 to LRSn), and the fixed time slots of the input lines (61 to 6m) and output lines (71 to 7m) are the same.

2. A transfer and processing system according to claim 1, characterized in that the composite clock signal (H1) comprises a 2.048 Mbit/s clock signal and a 64 kbit/s clock signal, comprising in a 125 microsecond time slot eight pulses of which the first brackets eight pulses (h1 to h8) of the 2.048 Mbit/s signal, and that the clock signal (H2) is a 64 kbit/s signal.

3. A system according to claim 1, characterized in that the switching matrix (1) and the serial communication controlers (C1 to Cm) are controlled by a microprocessor (3), and that, caused by the microprocessor, the switching matrix distributes a message sent by a controler to all or some only of the switching matrix output lines.

4. A system according to claim 1, characterized in that the switching matrix (1) and the serial communication controlers (C1 to Cm) are controlled by a microprocessor (3) and that, under the control of the microprocessor, any two of the controllers are connected to one another via the switching matrix in order to carry out tests on one of the two controlers or to permit dialog between the two controlers..

# FIG.1

FIG.2

0 141 956

# FIG.3

H1    h1_h8   F1    F2    F3    F4    F5    F6    F7    F8    h1_h8

125μs

H2    F11    F12    F13    F14    F15    F16    F17    F18

0 141 956